# EUROPEAN PATENT APPLICATION

(11) **EP 3 951 368 A1**
(43) Date of publication of application: **09.02.2022**
(21) Application number: 20782360.0
(22) Date of filing: 27.03.2020
(51) Int. Cl.: G01N 21/88, G01N 21/95, G06Q 30/02, H04N 5/225

(54) **ELECTRONIC DEVICE VALUATION SYSTEM**

(30) Priority: 29.03.2019 KR 20190037138; 26.03.2020 KR 20200036605
(71) Applicant: Mintit Co., Ltd., Gyeonggi-do 10117 (KR)
(72) Inventor: CHO, Sung Lack, Seoul 03913 (KR); CHOI, Hang Seok, Seoul 08371 (KR); SONG, In Ui, Seoul 07929 (KR)
(74) Representative: Nederlandsch Octrooibureau
(86) International application number: PCT/KR2020/004242
(87) International publication number: WO 2020/204503

(57) **Abstract**

An electronic device valuation system is disclosed. One embodiment comprises: a display; a main body on which an electronic device is placed; a camera for capturing the electronic device by using lighting; and a controller displaying, on the display, the value of the electronic device determined on the basis of visual inspection results of the electronic device and performance inspection results of the electronic device. The visual inspection results are on the basis of an image of the electronic device captured by the camera. In addition, the lighting outputs light, but a portion of the lighting outputs light of different wavelengths so as not to offset the diffuse reflection of visual defects of the electronic device.

## Description

### TECHNICAL FIELD

The present disclosure relates to a visual capture analysis system for valuation of an electronic device that captures an exterior of the electronic device and analyzes a captured image to valuate the electronic device, and more particularly, to a visual capture analysis system for valuation of an electronic device that may accurately analyze an exterior of the electronic device by preventing interference patterns or destructive interference caused by interference of light, first perform the valuation for an item with high weight and then skip the valuation for subordinate items according to the results, thereby removing unnecessary valuation operations, and capture the electronic device using multi-wavelength light sources.

### BACKGROUND ART

Terminals such as smart phones, tablet PCs, and laptops are the results of integrating the latest technologies and thus, are expensive.

There is increasing interest and demand for such expensive electronic devices, leading to lively trades thereof.

The internal functions of electronic devices are also important, but their visual conditions that can be externally seen are evaluated as the most significant factors for the valuation of the electronic devices (smart phones, tablet PCs, and the like).

The largest part of the visual valuation is occupied by the screen (display) occupying the largest area and the buttons functioning as keys. In particular, dents, scratches, and cracks (breaks) in the exterior are the main items, and the most important job of valuation is to check such items and classify their levels.

The value, that is, price, of an electronic device is evaluated by inspecting its condition. The condition inspection of electronic devices is mainly performed by humans, and thus the objectivity in the valuation (i.e., pricing) of electronic devices may not be assured. That is, the same electronic device may be valuated differently depending on the skill, condition, standard, etc. of an inspector, and if the price of the electronic device is evaluated low, an owner of the electronic device may have less trust in the valuation by the inspector.

Also, there is a disadvantage in that the inspection of the electronic device by the inspector is slow.

Therefore, "Automatic Evaluation Method and Apparatus for Used Mobile Terminal" is disclosed in KR Patent Application Publication No. 10-2017-0019085, as a prior art that may ensure objectivity by automating the valuation of electronic devices.

KR 10-2017-0019085 discloses that a camera set captures a used mobile terminal placed in an automatic valuation apparatus, and the captured image is analyzed to automatically inspect the visual conditions of the case, bezel, tempered glass, and screen of the used mobile terminal.

In analyzing visual conditions of a used mobile terminal using images, the capture environment of the used mobile terminal, that is, the position, illumination angle, wavelength (color temperature), and brightness of a lighting device, and the view angle of a camera, are very important.

However, KR10-2017-0019085 does not consider such a capture environment, and thus the reliability of its valuation of used mobile terminals is low.

If a light source of a lighting unit of an electronic device is reflected on the surface of the electronic device and appears in an image obtained by a camera, it is impossible to determine the condition of the corresponding part of the electronic device, and a scattering part (usually, a part damaged by deformation) of the terminal has a scattering intensity that changes according to the illumination angle of the light source.

Therefore, the electronic device is captured while light sources illuminate simultaneously in many directions and captured multiple times while changing the illumination angle.

At this time, if the wavelengths (i.e., color temperatures) of the light sources simultaneously illuminating are the same, interference patterns by the interference of light produce destructive interference, hindering the analysis of the visual conditions of the electronic device through the images.

Therefore, it is necessary to prevent such interference by light sources that illuminate an electronic device, but the prior art does not take this into account.

An electronic device is valuated for various items, where if an item has a significant defect, the electronic device is determined not to be purchased, or a maximum amount of deduction is determined, and thus, the valuation on the other items is unnecessary.

However, the prior art determines whether to purchase an electronic device and the purchase price after the valuation on all items and thus, wastes a lot of time and cost.

### DISCLOSURE OF THE INVENTION

### Technical Solutions

According to an aspect, there is provided an electronic device valuation system including a display, a main body in which an electronic device is placed, a camera configured to capture the electronic device using light devices, and a controller configured to display, on the display, a value of the electronic device determined based on visual inspection results of the electronic device and performance inspection results of the electronic device.

The lighting devices may output light, wherein a portion of the lighting devices may output light of different wavelengths so as not to offset a diffuse reflection of visual defects of the electronic device.

The other portion of the lighting devices may output light of the same wavelength or output light of different wavelengths.

A distance between the portion of the lighting devices may be shorter than a distance between the other portion of the lighting devices.

A first lighting device of the lighting devices may be positioned on a first side inside the main body, a second lighting device of the lighting devices may be positioned on a second side facing the first side, a third lighting device of the lighting devices may be positioned on a third side inside the main body, and a fourth lighting device of the lighting devices may be positioned on a fourth side facing the third side.

The first lighting device and the second lighting device may output the light of the different wavelengths.

The first lighting device and the second lighting device may output light at a first illumination angle, and the third lighting device and the fourth lighting device may output light at a second illumination angle.

The visual defects may include defects in the display of the electronic device.

### EFFECTS

According to embodiments, a visual capture analysis system for valuation of an electronic device, capturing using multi-wavelength light sources, may prevent interference patterns or destructive interference caused by interference of light by controlling the light sources simultaneously illuminating the electronic device at different angles to have different wavelengths (color temperatures), thereby more accurately analyzing the exterior of the electronic device.

### BRIEF DESCRIPTION OF DRAWINGS

FIG. 1 is a schematic block diagram of a visual capture analysis system for valuation of an electronic device according to the present disclosure.
FIGS. 2a to 2c are diagrams illustrating examples of a camera unit and a lighting unit provided in a darkroom of a main body according to the present disclosure.
FIGS. 3a and 3b are diagrams illustrating a positional relationship between a camera unit for capturing a state of a top surface of an electronic device and a lighting unit.
FIG. 4 is a diagram illustrating a positional relationship between a camera unit for capturing a state of a side surface of an electronic device and a lighting unit.
FIG. 5 is a diagram illustrating a positional relationship between a camera unit for capturing a state of a bottom surface of an electronic device and a lighting unit.
FIG. 6 is a diagram illustrating a positional relationship between a camera unit for capturing a state of a screen disposed on a top surface of an electronic device and a lighting unit.
FIGS. 7a to 7d are diagrams illustrating a relationship between a view angle of a camera for capturing an entire electronic device and a capturing position according to the same.
FIGS. 8a to 8c are diagrams illustrating structures in which a single camera simultaneously captures multiple faces of an electronic device using reflective mirrors.
FIG. 9 is a flowchart illustrating a process of deleting and initializing data in an electronic device purchased through valuation.

### BEST MODE FOR CARRYING OUT THE INVENTION

Hereinafter, embodiments will be described in detail with reference to the accompanying drawings. However, various alterations and modifications may be made to the embodiments. Here, the embodiments are not construed as limited to the disclosure. The embodiments should be understood to include all changes, equivalents, and replacements within the idea and the technical scope of the disclosure.

The terminology used herein is for the purpose of describing particular embodiments only and is not to be limiting of the embodiments. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like constituent elements and a repeated description related thereto will be omitted. In the description of embodiments, detailed description of well-known related structures or functions will be omitted when it is deemed that such description will cause ambiguous interpretation of the present disclosure.

Also, in the description of the components, terms such as first, second, A, B, (a), (b) or the like may be used herein when describing components of the present disclosure. These terms are used only for the purpose of discriminating one constituent element from another constituent element, and the nature, the sequences, or the orders of the constituent elements are not limited by the terms. When one constituent element is described as being "connected", "coupled", or "attached" to another constituent element, it should be understood that one constituent element can be connected or attached directly to another constituent element, and an intervening constituent element can also be "connected", "coupled", or "attached" to the constituent elements.

The same name may be used to describe an element included in the embodiments described above and an element having a common function. Unless otherwise mentioned, the descriptions on the embodiments may be applicable to the following embodiments and thus, duplicated descriptions will be omitted for conciseness.

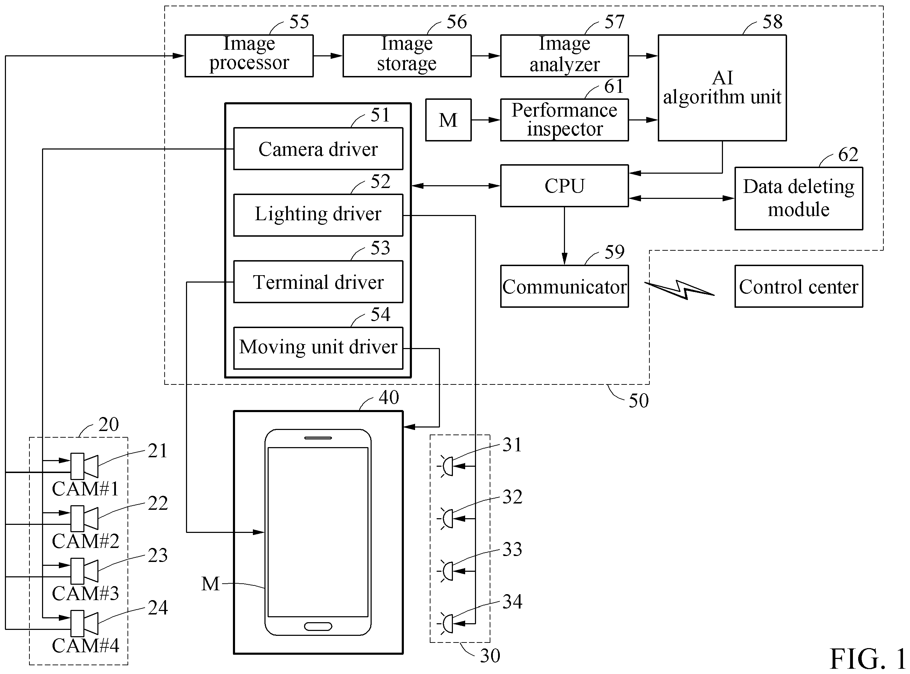

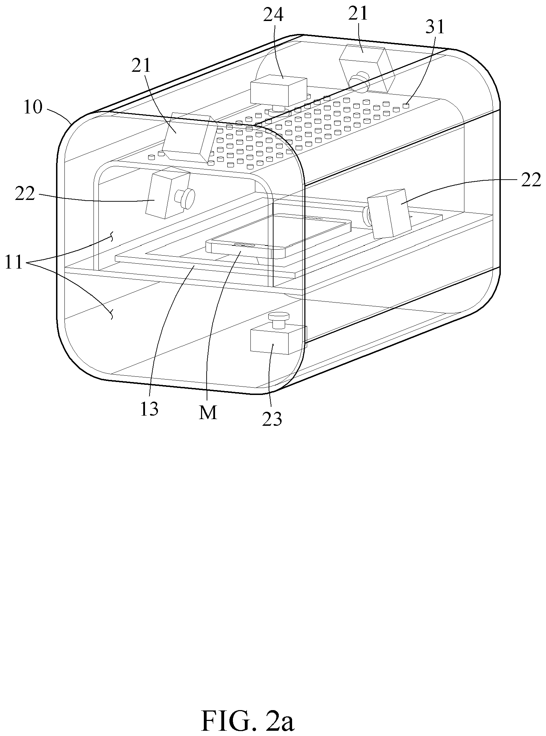

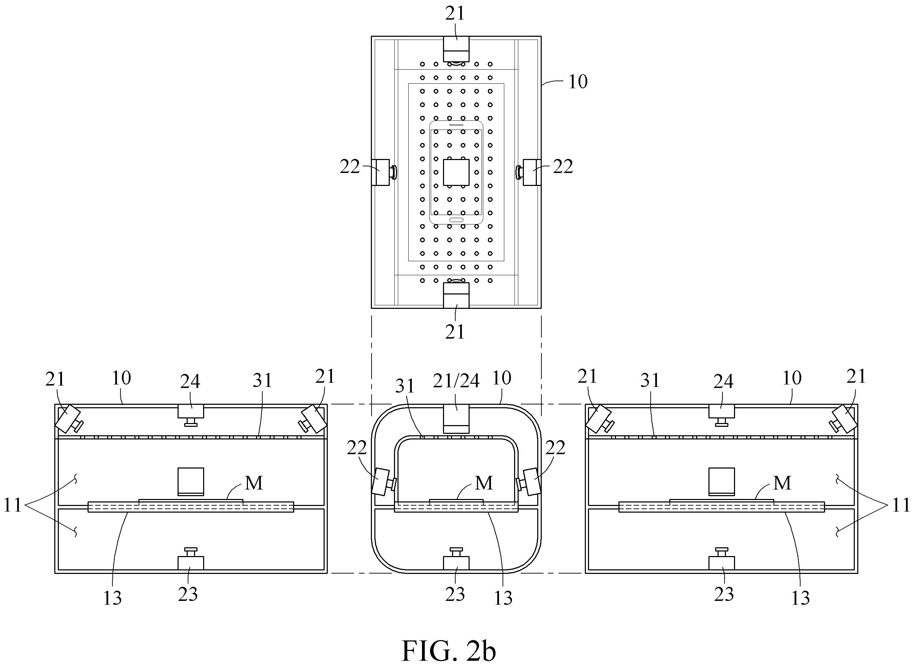

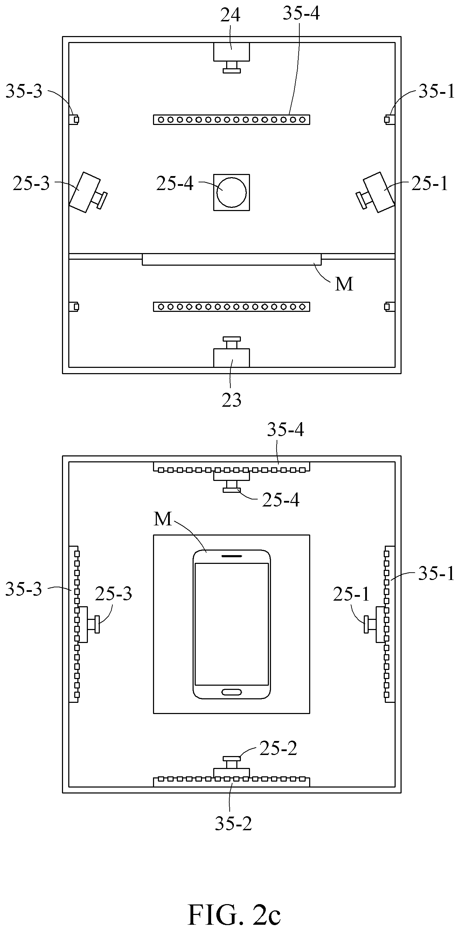

As shown in FIGS. 1 and 2, a visual capture analysis system for valuation of an electronic device, which captures using multi-wavelength light sources, includes a main body 10, a camera unit 20, a lighting unit 30, a controller 50, and the like. The visual capture analysis system may also be referred to as an electronic device valuation system or an electronic device purchase system.

Although not shown in FIG. 1, the visual capture analysis system may further include a display (e.g., a touch display). As it will be described later, the controller 50 may display a value of an electronic device (e.g., the purchase price of the electronic device) on the display.

The electronic device may correspond to, for example, a used mobile terminal, but is not limited thereto.

The visual capture analysis system is provided in a kiosk installed in a field to purchase an electronic device M in an unmanned manner, and transmits and receives data through communication with a central control center (not shown) over the Internet communication network.

The main body 10 provides a darkroom 11 in which the electronic device M is to be placed and which blocks external factors in a capture environment.

In the darkroom 11 of the main body 10, a plate 13 on which the electronic device M is to be placed is disposed horizontally across a middle portion of the darkroom 11.

In the darkroom 11, the camera unit 20 for capturing the top surface, the bottom surface, and the side surface of the electronic device M placed on the plate 13, the lighting unit 30 for lighting, and cables (not shown) withdrawn from the controller 50 to control an image displayed on the screen while supplying power to the electronic device M are provided. In addition, in the darkroom 11, a moving unit 40 for relocating the electronic device M by rotating the plate 13 or pushing or pulling the electronic device M, or another moving unit 40 for relocating the camera unit 20 to adjust capture directions of cameras may be further provided.

The controller 50 controls the driving of the camera unit 20 and the lighting unit 30 to provide an optimal capture environment in the darkroom 11 of the main body 10, and analyzes a condition of the electronic device M through an image captured by the camera unit 20.

The controller 50 includes a drive controller for providing an optimal capture environment. The drive controller includes a camera driver 51 for controlling the driving of the camera unit 20, a lighting driver 52 for controlling the driving of the lighting unit 30, an electronic device M driver 53 for controlling the driving of the electronic device M, and a moving unit driver 54 for controlling the driving of the moving unit 40 for adjusting the capture direction by relocating the electronic device M or the cameras. In addition, the controller 50 further includes an image processer 55 for pre-processing and compressing the image captured by the camera unit 20, an image storage 56 for storing the image processed by the image processor 55, an image analyzer 57 for retrieving and analyzing the image stored in the image storage 56, a performance inspector 61 for inspecting the performance of internal components of the electronic device M through wired or wireless access to the electronic device M, an artificial intelligence (AI) algorithm unit 58 for valuating the electronic device M using inspection results from the performance inspector 61 and analysis results from the image analyzer 57, and a communicator 59 for communicating with the central control center, and a data deleting module 62 for deleting and initializing data in a memory of the electronic device M purchased through valuation.

Valuation items for the valuation by the AI algorithm unit 58 include independent items that have no (or a little) mutual association, and each independent item includes several dependent items.

Examples of the independent items include "case", "bezel", and "tempered glass" related to the visual conditions of the electronic device M, and "display module", "charging module", "communication module", and "camera" related to the performance of internal components.

Examples of dependent items related to the independent item "tempered glass" may include "scratch", "crack", "break", "gap", and the like.

Each of the independent items and the dependent items is assigned a weight, and the AI algorithm unit valuates independent and dependent items with high weights first. Here, an item to be valuated first is an item with a high weight among the items that may be valuated using inspection results obtained by the performance inspector and analysis results obtained by the image analyzer, while an item yet to be valuated is not an item with a high weight, including an item that cannot be valuated since an analysis result therefor is yet to be obtained.

There are levels of values valuated for the items, and depending on the levels, the electronic device M may not be purchased, or a different amount is deducted from the purchase price.

As for the weights of the items, an item that is determined not to purchase if defected may be assigned a high weight, and an item that is determined to purchase but to deduct a large amount may be assigned a next high weight.

The AI algorithm unit 58 valuates the electronic device M in order of items with high weights.

If an item is valuated at a level of not purchasing the electronic device M due to the valuated value (that is, the degree of defect) corresponding to not repairable or excessive repair cost, the valuation on the other items is suspended not to proceed with any further unnecessary valuation.

When a dependent item is determined at a level corresponding to the maximum amount of deduction or the sum of amounts of deduction of the previously valuated dependent items reaches the maximum amount while dependent items included in an independent item are valuated in order of weights, the valuation on the subordinate dependent items is suspended not to proceed with any further unnecessary valuation.

Thus, the valuation for purchasing the electronic device M is performed quickly.

When an item is valuated as such a defect of a not-to-purchase level while being valuated by the AI algorithm unit 58, the controller 50 suspends unnecessarily capturing the electronic device M by the camera unit 50 or inspecting the performance of internal components of the electronic device M by the performance inspector.

In addition, when additional data for an item or another item related thereto are needed while the item is valuated by the AI algorithm, the controller 50 may control the camera unit 20, the lighting unit 30, and the performance inspector 61 to obtain the necessary data (image analysis results, component performance inspection results) for smooth valuation.

The AI algorithm unit 58 may request re-determination by transmitting related data (analysis results, inspection results, and the like) to the central control center through the communicator 59, when it is unclear whether to determine an item to be "good" or "defected", or it is unclear whether to determine a level to be "high" or "middle", for example, within an error range in determining the quality of the item to be valuated or a level of a defect thereof.

The AI algorithm unit 58 performs the valuation for the other items after requesting the re-determination from the control center, and when a result of the re-determination is received from the control center, reflects the result and finally evaluates the value of the corresponding electronic device M. At this time, if failing in transmitting the request for re-determination or receiving the result of the re-determination due to poor communications, it is enrolled to postpone the valuation for the corresponding item, and a related purchase process is performed. With the consent of a seller of the electronic device M, the seller is paid in advance the cost excluding the deducted amount of the item for which the valuation is postponed, and then paid the amount corresponding to the evaluated value when the valuation for the postponed item is completed.

The lighting unit 30 may include first to fourth lighting devices 31 to 34, and the camera unit 20 may include first to fourth cameras 21 to 24.

The first to fourth cameras 21 to 24 of the camera unit 20 may include a wide-angle lens with a wide angle of view, a 1:1 lens, a macro lens, a telephoto lens, and a lens that selectively has Pan/Tilt/Zoom functions and captures using visual light, infrared, or both.

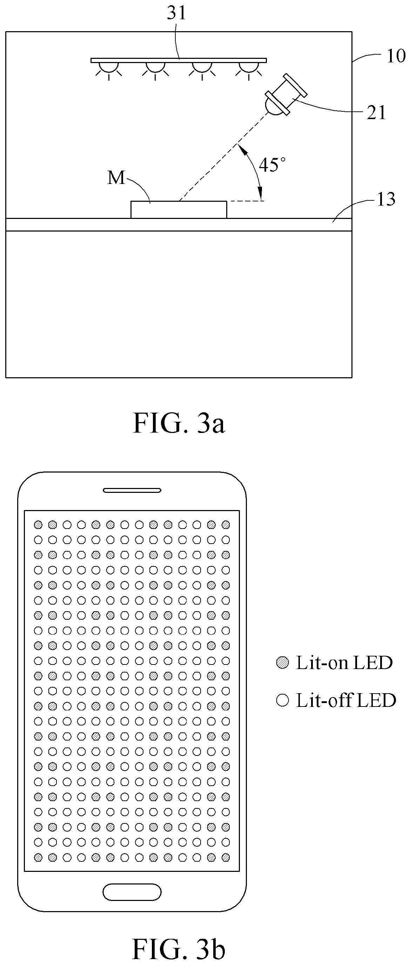

Referring to FIGS. 2a, 2b, and 3a, the first lighting device 31 and the first camera 21 illuminate and capture a top surface of the electronic device M placed in the darkroom 11 of the main body 10, thereby analyzing the condition of the top surface of the electronic device M, that is, damage occurring in the top surface.

Tempered glass is arranged on the top surface of the electronic device M to cover and protect the screen. Alternatively, the electronic device M may be provided with a bezel at the edge of the top surface.

Damage, such as scratches, cracks, etc. may occur in the tempered glass covering the top surface of the electronic device M. Tempered glass is expensive and thus, is one of the major factors determining the price (value) of the electronic device M. Therefore, the condition of the tempered glass needs to be analyzed more precisely.

Tempered glass is transparent, so the positions and brightness of lighting devices, and the capturing angles of the cameras are very important factors in analyzing the condition.

First, the first camera 21 captures, from an upper position, the top surface of the electronic device M at an inclined capturing angle between 35 degrees and 60 degrees. The capturing angle of the first camera 21 is preferably 45 degrees.

Damages such as scratches or cracks in the transparent tempered glass may or may not be displayed in the image depending on the brightness of the lighting device.

Therefore, the first lighting device 31 includes LEDs arranged in a grid form, and the LEDs in the grid form are configured to have an area that may cover the entire electronic device M.

In addition, the LEDs of the first lighting device 31 arranged in the grid form illuminate the electronic device M, in a state in which lines of the LEDs intersect and are lit on and off. Here, the lines of the LEDs that intersect and are lit on and off may include horizontal, vertical, and diagonal lines, and also include pattern lines such as circular or specific shaped lines, wherein a portion of the LEDs may intersect and be lit on and off and capturing may be performed while lit-on LEDs are moved.

Referring to FIG. 3b, the images of the lit-on LEDs among the LEDs of the first lighting device 31 are formed on the tempered glass on the top surface of the electronic device. Four lines of two LEDs forming a pair are lit on in the longitudinal direction, and three lines are lit off in the longitudinal direction therebetween. In addition, twelve lines are lit on in the width direction, and eleven lines are lit off in the width direction therebetween.

Capturing with the first camera 21 in a state in which the LEDs of the first lighting device 31 are lit on and off as shown in FIG. 3b, capturing in a state in which the twelve lines lit on in the width direction are lit off and the lit-off eleven lines are lit on, then capturing in a state in which the four lines lit on in the longitudinal direction are lit off and the lit-off three lines are lit on, and then capturing in a state in which the twelve lines lit on in the width direction are lit off and the lit-off eleven lines are lit on, images with different brightness and difference presence and absence of the images of the lit-on LEDs may be obtained with respect to the entire surface of the tempered glass, and whether the tempered glass has damage such as scratches and cracks may be accurately analyzed by analyzing the images.

Alternatively, the first lighting device 31 may use LEDs arranged in one column, rather than the LEDs arranged in the grid form. Here, the LEDs arranged in one column represents a case in which the LEDs may not cover the entire top surface of the electronic device M, and may include LEDs arranged in two columns, three columns, and the like.

In a case where the LEDs of the first lighting device 31 cannot cover the entire top surface of the electronic device M, when the first lighting device 31 with the LEDs being lit on passes above the electronic device M, a lit-on image and a lit-off image coexist on the top surface of the electronic device M, and the entire top surface may be captured by the first camera 21 in a state of the lit-on image and a state of the lit-off image.

Conversely, when not the first lighting device 31 but the electronic device M moves, a lit-on image and a lit-off image coexist on the top surface of the electronic device M, and a state of each image may be captured by the first camera 21.

For reference, when capturing the tempered glass of the electronic device M, the capturing is performed while the screen of the electronic device M is turned off.

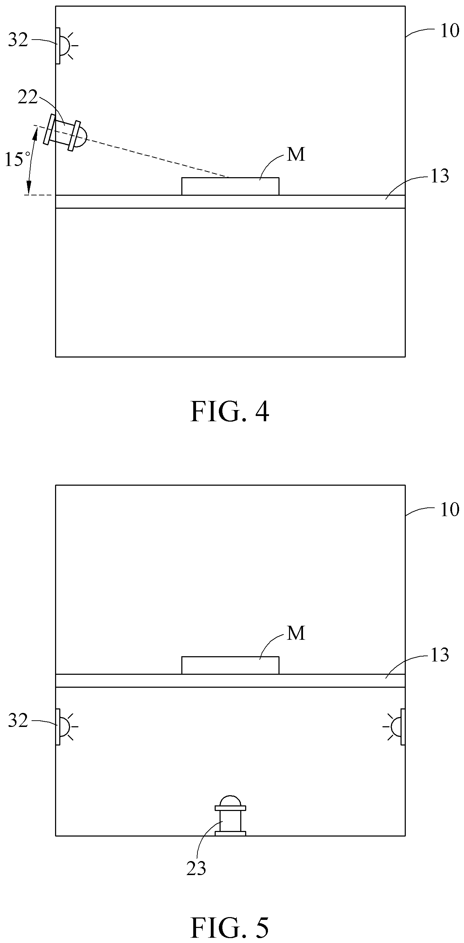

Referring to FIGS. 2a, 2b, and 4, the second lighting device 32 and the second camera 22 illuminate and capture a side surface of the electronic device M placed in the darkroom 11 of the main body 10, thereby analyzing the condition of the side surface of the electronic device M.

The second lighting device 32 and the second camera 22 may allow the analysis of damages, such as scratches, cracks, and breaks, occurring in the side surface of the electronic device M, and deformations, such as bending, of the electronic device M.

The second camera 22 captures, from an upper position, the side surface of the electronic device M at an inclined capturing angle between 1 degree and 30 degrees, preferably, between 5 degrees and 30 degrees. A more preferable angle is 15 degrees. The second camera 22 may capture the electronic device M from the side precisely in the middle. In this case, the electronic device M may be distorted into a bent shape in the image due to the angle of view of the camera. Therefore, capturing at an inclined angle between 5 degrees and 30 degrees as shown above, rather than from the side precisely in the middle, is preferable. If the camera uses a lens with a wide angle of view to capture a big electronic device M at a close distance in a single shot, the side surface of the electronic device may look bent in the captured image. However, adjusting the angle of the second camera 22 as above may correct the bending of the image. If the distance between the electronic device and the camera is adjusted, such adjusting of the inclined angle of the camera may be unnecessary. The second camera 22 may include a wide-angle lens with a wide angle of view, a 1:1 lens, a macro lens, a telephoto lens, and a lens that selectively has Pan/Tilt/Zoom functions.

The second lighting device 32 illuminates the side surface of the electronic device M from the same direction as the second camera 22. The second lighting device 32 may be separately prepared and mounted in the darkroom 11, or LEDs arranged on the edge lines among the LEDs of the first lighting device 31 arranged in the grid form may be used as the second lighting device 32.

Referring to FIGS. 2a, 2b, and 5, the third lighting device 33 and the third camera 23 illuminate and capture a bottom surface of the electronic device M placed in the darkroom 11 of the main body 10, thereby analyzing the condition of the bottom surface of the electronic device M.

The third lighting device 33 and the third camera 23 may allow the analysis of damages, such as scratches, cracks, and breaks, occurring in the side surface of the electronic device M.

The third camera 23 is disposed under the electronic device M to capture the bottom surface of the electronic device M placed on the transparent plate 13, and the third lighting device 33 illuminates the bottom surface of the electronic device M from a lower position.

The third camera 23 and the third lighting device 33 may capture and illuminate the electronic device M from a lower position precisely in the middle, or from a lower position in an inclined direction.

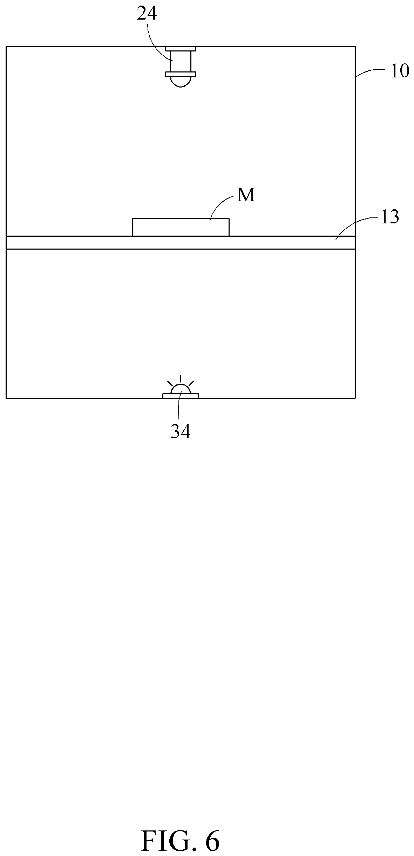

Referring to FIGS. 2a, 2b, and 6, the fourth lighting device 34 and the fourth camera 24 illuminate and capture the top surface of the electronic device M placed in the darkroom 11 of the main body 10, thereby analyzing the condition of the screen disposed on the top surface of the electronic device M.

The fourth lighting device 34 and the fourth camera 24 may allow the analysis of an output state of the screen of the electronic device M and whether damages, such as stains, aging, and burn-ins, occur in the screen.

The fourth camera 24 captures the screen of the electronic device M from an upper position precisely in the middle. The controller 50 controls the terminal driver 53 to display the image on the screen, thereby allowing an output state of the screen to be captured and analyzed, and display the entire screen in white, gray, or black, thereby capturing and analyzing whether the screen has damages such as stains, aging, and burn-ins.

The fourth lighting device 34 illuminates the bottom surface of the electronic device M from a lower position for color balance with the screen, thereby increasing the quality of the screen for the condition analysis of the screen. In other words, when the screen displayed in white, gray, or black is captured, light from the screen spreads to the surroundings, making the boundary of the screen unclear and causing an error in image analysis. Accordingly, such issues may be prevented through white balance attained by illuminating the electronic device M by the fourth lighting device 34 from a lower position.

At this time, to prevent such issues, instead of the fourth lighting device 34, a black blocking sheet that absorbs and blocks light to the surroundings of the electronic device M may be disposed on the plate 13 on which the electronic device M is to be placed.

For reference, disposing the black blocking sheet even when capturing and illuminating the side surface and bottom surface of the electronic device M may help to obtain higher quality images.

The condition of the electronic device M is analyzed by capturing a total of six faces: the top surface, the bottom surface, and the four side surfaces.

At this time, considering the size of the electronic device M and the angle of view of the cameras, all six faces of the electronic device M may be captured using two schemes. The first scheme is to capture all six faces of the electronic device M by moving cameras by means of the moving unit 40 while minimizing the number of cameras, and the second scheme is to capture all six faces by increasing the number of cameras while simplifying the moving unit 40. Of course, there is also a scheme of capturing all six faces of the electronic device M placed in the right position without moving cameras by maximizing the number of cameras without using the moving unit 40.

The first scheme provides an environment closest to the environment in which humans perform inspections, but has an issue of increasing size of the entire system and increasing cost for system configuration and difficulties in implementing fine-tuning for movements and motions of the moving unit 40, to implement a mechanical mechanism of the moving unit 40 for moving a product to be inspected (that is, the electronic device M) in various directions in a specific space.

Therefore, rather than the first scheme, the second scheme that increases the number of cameras a bit may be preferable.

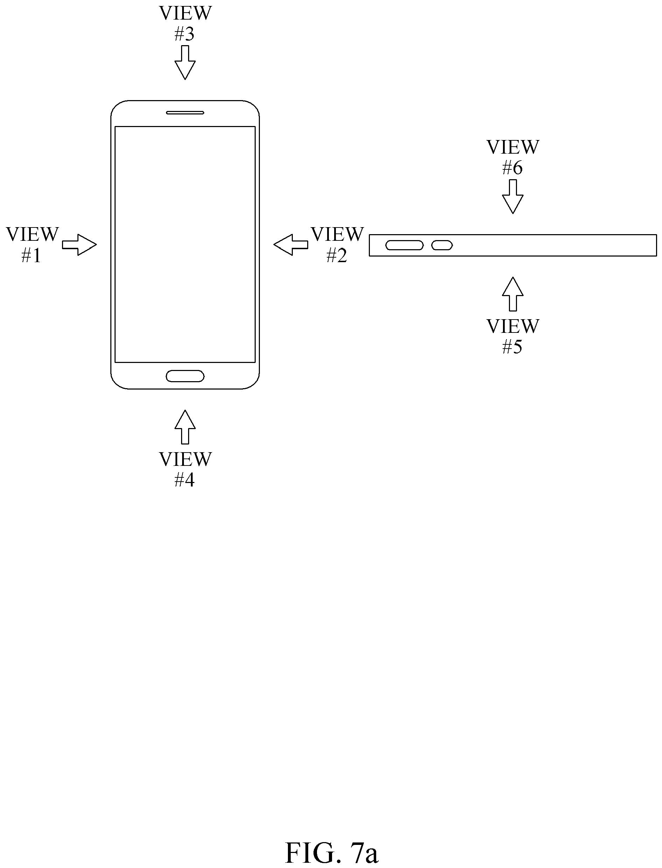

Referring to FIG. 7a, the cameras may capture the six faces of the electronic device M from six capture directions of the four sides (VIEW #1, #2, #3, #4), the bottom (VIEW #5), and the top (VIEW #6).

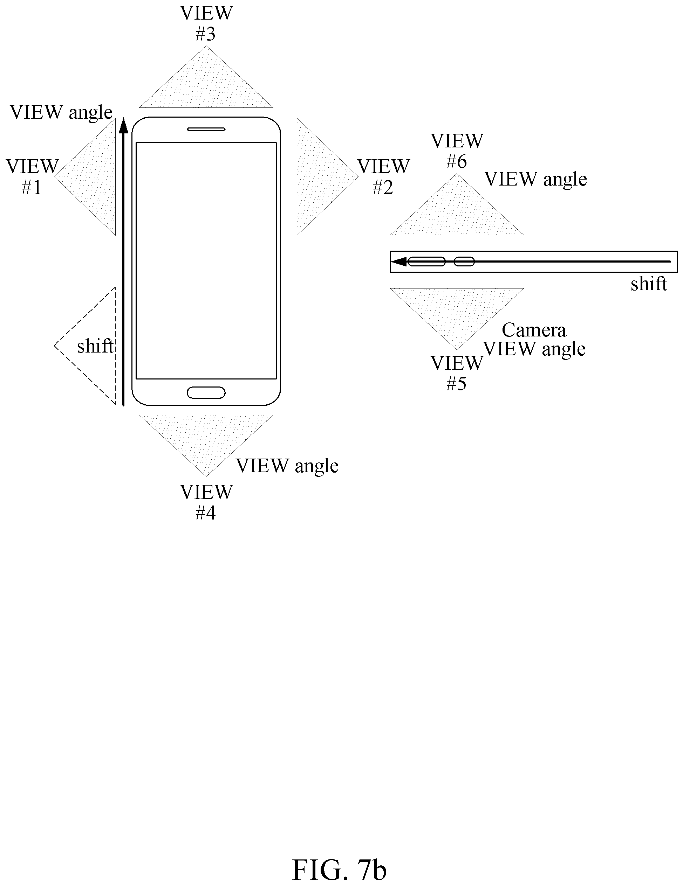

Referring to FIG. 7b, if the mobile unit 40 is configured to rectilinearly move the electronic device M forward and backward when the cameras have a small angle of view, the cameras may capture the six faces of the electronic device M from six capture directions of the four sides (VIEW #1, #2, #3, #4), the bottom (VIEW #5), and the top (VIEW #6). For reference, if the electronic device M does not move forward and backward in FIG. 7b, cameras may need to be added to two capture directions on the sides and to one capture direction on each of the top and the bottom to capture the six faces of the electronic device M.

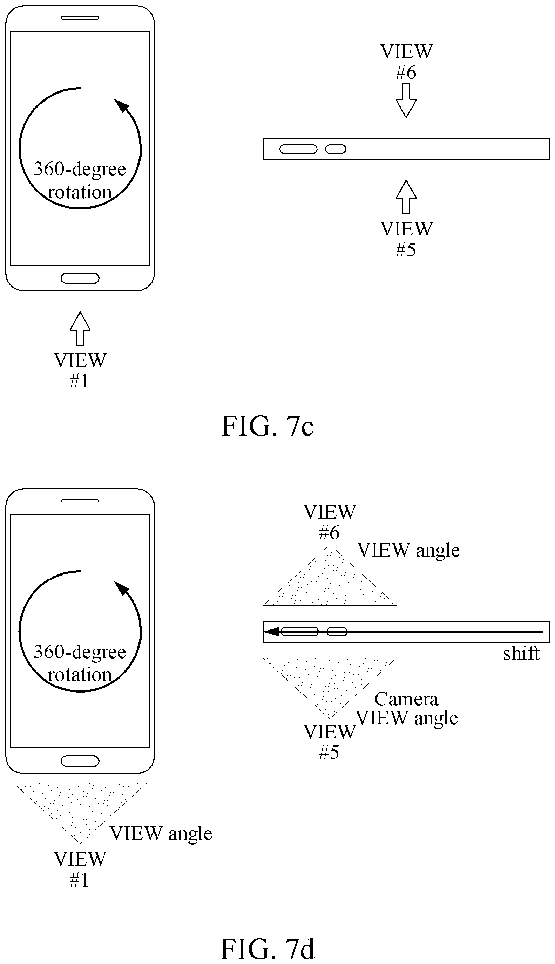

Referring to FIG. 7c, if the mobile unit 40 is configured to rotate the electronic device M by 360 degrees, the cameras may capture all the six faces of the electronic device M from only three capture directions of the side (VIEW #1), the bottom (VIEW #5), and the top (VIEW #6).

Referring to FIG. 7d, if the mobile unit 40 is configured to rotate the electronic device M by 360 degrees and rectilinearly move the electronic device M forward and backward when the cameras have a small angle of view, the cameras may capture all the six faces of the electronic device M from only three capture directions of the side (VIEW #1), the bottom (VIEW #5), and the top (VIEW #6).

When the light sources (where LEDs correspond to the light sources) of the lighting unit 20 directly illuminate the electronic device M, and the cameras capture the light sources reflected in the surface of the electronic device M and surroundings thereof, it is impossible to determine portions of an image in which the light sources are positioned. Therefore, in a state in which a light source at another position illuminates the electronic device M, the cameras may capture an image of the electronic device M to have no light source at a portion in which a light source is reflected before. That is, multiple light sources are provided in the lighting unit 20, and the cameras capture the electronic device M in a state in which a portion of the light sources are alternately lit on, thereby obtaining images.

In addition, the cameras may capture the electronic device M in a state in which the light sources are not reflected in the surface of the electronic device M, that is, may capture such that the light sources do not appear in the image. At this time, the scattering degree of a scattering part (where typically, scattering occurs principally in a scratched or deformed portion of the electronic device M) may be weak according to the illumination angle of light illuminating the electronic device M, and thus it may not be identified in the image. So, in this case, the lighting unit needs to cause scattering of a predetermined intensity or more at the scattering portion of the electronic device M by illumination with the light sources at several angles.

As such, when the lighting unit 20 illuminates the electronic device M, multiple light sources having different illumination angles typically illuminate at the same time. At this time, if the light sources have the same wavelength, interference of light may cause destructive interference, producing interference patterns in which dark or bright fringes are generated. Destructive interference or interference patterns hinder image analysis.

Accordingly, the present disclosure may cause the light sources of the lighting unit to illuminate light of more than two types of wavelengths (color temperatures) and cause the light sources to illuminate the electronic device M with light of different wavelengths at the same time while changing the illumination angles of the multiple light sources of light through the controller 50, thereby preventing the occurrence of interference of light.

Light sources emitting light of colors (i.e., color temperatures, wavelengths) that are adjustable may be used, and the controller 50 may control the light sources to simultaneously illuminate with different colors, thereby preventing interference of light. Alternatively, light sources each illuminating with one color may be used, and the controller may select light sources with different colors to simultaneously illuminate, thereby preventing interference of light.

To prevent interference patterns caused by interference of light, surface light source filters for converting illumination into a surface light source may be provided in the light sources. At this time, in response to the conversion to the surface light source, the amount of light may decrease, which may be handled by providing narrow-angle filters for adjusting the illumination angle to a narrow angle. The surface light source filters and the narrow-angle filters may be independently provided in the light sources, or may be combined and provided together.

FIG. 2c illustrates front and plan views of an arrangement structure of a camera unit and a lighting unit, in which cameras capture the electronic device M in a state in which lighting devices are not reflected directly in the electronic device M, and the lighting devices have two or more types of wavelengths, which is good for preventing interference of light.

Referring to FIG. 2c, the fourth camera 24 for capturing the top surface of the electronic device M is disposed on the top surface of the main body 10, fifth cameras 25-1 to 25-4 for capturing the four side surfaces of the electronic device M are disposed on the respective side surfaces of the main body 10, and the third camera 23 for capturing the bottom surface of the electronic device M is disposed on the bottom surface of the main body 10.

Fifth lighting devices 35-1 to 35-4 are arranged on the respective side surfaces of the body 10. In the example shown in FIG. 2c, the fifth lighting device 35-1 may be positioned on the first side surface of the body 10, the fifth lighting device (or second light source) 35-3 may be positioned on the second side surface facing the first side surface, the fifth lighting device 35-2 may be positioned on the third side surface of the body 10, and the fifth lighting device 35-4 may be positioned on the fourth side surface facing the third side surface.

Each of the fifth lighting devices 35-1 to 35-4 corresponds to a light source. The fifth lighting device 35-1 may be referred to as the first light source, the fifth lighting device 35-2 may be referred to as the second light source, the fifth lighting device 35-3 may be referred to as the third light source, and the fifth lighting device 35-4 may be referred to as the fourth light source.

Each of the fifth lighting devices 35-1 to 35-4 may have, for example, a structure in which LEDs are arranged in a row, but is not limited thereto. Depending on the implementation, each of the fifth lighting devices 35-1 to 35-4 may include a single LED.

To prevent light from fifth lighting devices 35-1 to 35-4 from being reflected directly in the electronic device M and captured by the fourth camera 24 and the fifth cameras 25-1 to 25-4, the lighting of the fifth lighting devices 35-1 to 35-4, the driving of the fourth camera 24, and the driving of the fifth cameras 25-1 to 25-4 may be controlled by the controller.

The light from the fifth lighting devices 35-1 to 35-4 is diffusely reflected or scattered in a deformed (cracked, broken, or scratched) portion of the electronic device M, and at least one of the fourth camera 24 and the fifth cameras 25-1 to 25-4 obtains an image in which the scattered portion of the electronic device M is captured. Here, the degree of diffuse reflection or scattering may be adjusted according to the angle at which the fifth lighting devices 35-1 to 35-4 illuminate the electronic device M.

In order to prevent interference, the fifth lighting devices 35-1 to 35-4 may simultaneously illuminate the electronic device M with two or more wavelengths from two or more directions. If light is vertically illuminated toward a cracked or broken part of a product made of a material such as glass, there may occur little or no scattering. If light is illuminated from multiple directions toward the cracked or broken part at the same time, destructive interference caused by interference of light may occur. Accordingly, the fifth lighting devices 35-1 to 35-4 may illuminate the electronic device M with two or more wavelengths.

In the example shown in FIG. 2c, the fifth lighting device 35-1 and the fifth lighting device 35-3 may output light of different wavelengths. For example, the fifth lighting device 35-1 may output light of a wavelength λ1, and the fifth lighting device 35-3 may output light of a wavelength λ2. Since the distance between the fifth lighting device 35-1 and the fifth lighting device 35-3 is short, when the fifth lighting device 35-1 and the fifth lighting device 35-3 output light of the same wavelength, the diffuse reflection or scattering for the visual defect (e.g., crack, break, and scratch) of the electronic device M may be offset by interference. Due to this, an image of a visual defect of the electronic device M may not be accurately formed on one or more or all of the fourth camera 24 and the fifth cameras 25-1 to 25-4. Accordingly, the fifth lighting device 35-1 and the fifth lighting device 35-3 may output light of different wavelengths.

In an embodiment, the fifth lighting device 35-4 facing the side surface on the top of the electronic device M and the fifth lighting device 35-2 facing the side surface on the bottom of the electronic device M may output light of the same wavelength. Since the distance between the fifth lighting device 35-2 and the fifth lighting device 35-4 is long enough to have no interference of light, the fifth lighting device 35-2 and the fifth lighting device 35-4 may output light of the same wavelength. In this case, the fifth lighting device 35-2 and the fifth lighting device 35-4 may output light of wavelengths different from those of the fifth lighting device 35-1 and the fifth lighting device 35-3, respectively. For example, the fifth lighting device **25-2** and the fifth lighting device **25-4** may output light of a wavelength λ3. According to the implementation, the fifth lighting device 35-2 and the fifth lighting device 35-4 may output light of different wavelengths. For example, the fifth lighting device 35-2 may output light of a wavelength λ3, and the fifth lighting device 35-4 may output light of a wavelength λ4. In this case, the fifth lighting devices 35-1 to 35-4 output light of different wavelengths.

In the example shown in FIG. 2c, the fifth lighting device 35-1 and the fifth lighting device 35-3 may output light at a first illumination angle, and the fifth lighting device 35-2 and the fifth lighting device 35-4 may output light at a second illumination angle different from the first illumination angle. According to the implementation, the fifth lighting devices 35-1 to 35-4 may output light at the same illumination angle.

In FIG. 2c, when the distance between the electronic device M and the fifth lighting device 35 and the distance between the electronic device M and the fifth camera 25 are the same, the angle at which the fifth lighting device 35 illuminates the electronic device M may be preferably set to 45 degrees or less. At this time, when the area of the electronic device M increases or the distance between the fifth lighting device 35 and the electronic device M increases, the angle at which the fifth lighting device 35 illuminates the electronic device M may decrease in proportion thereto.

In the case of the example shown in FIG. 2c, the light from the fifth lighting devices 35-1 to 35-4 is not reflected directly in the electronic device M and not captured by the fourth camera 25-4 and the fifth cameras 25-1 to 25-4. Thus, the fifth lighting devices 35-1 to 35-4 may output light of strong intensity. At this time, fringes may occur in the image due to the material characteristics of the electronic device M. In order to solve this, surface light source filters for conversion to surface light sources may be used for the fifth lighting devices 35-1 to 35-4, and narrow-angle filters for adjusting the illumination angles of the fifth lighting devices 35-1 to 35-4 to narrow angles may be used to increase the efficiency of brightness.

FIG. 2c shows that the capturing is performed as the fifth lighting devices 35-1 to 35-4 illuminate at the same time, whereby the number of images obtained for analyzing the electronic device M may be reduced, and accordingly, the time for valuating the electronic device M through analysis of images may be reduced.

In an embodiment, the controller may display the value of the electronic device M (e.g., the purchase price of the electronic device M) on the display of the visual capture analysis system. For example, the controller may perform a visual inspection and a performance inspection on the electronic device M, and determine the value of the electronic device M through at least one of visual inspection results and performance inspection results. The visual inspection may be performed based on one or more images obtained by capturing the electronic device M by the cameras 23, 24, and 25-1 to 25-4. As another example, the controller may transmit one or more images obtained by capturing the electronic device M by the cameras 23, 24, and 25-1 to 25-4 to the server or the control center. In addition, the controller may transmit the performance inspection results of the electronic device M to the server or the control center. The server or the control center may perform a visual inspection on the electronic device M using the received one or more images, and determine the value of the electronic device M through the visual inspection results and the performance inspection results of the electronic device M. The server or the control center may transmit the determined value of the electronic device M to the visual capture analysis system. The controller may display the determined value of the electronic device M received from the server or the control center on the display of the visual capture analysis system. Accordingly, the owner of the electronic device M may check what the value of the electronic device M is, and may or may not sell the electronic device M. When the owner of the electronic device M finally decides to sell the electronic device M, the controller may safely move the electronic device M placed in the main body 10 into a collection box which will be described later.

The system according to the present disclosure may preferably adjust the illuminance according to each capture environment. Accordingly, an illuminance sensor is used to monitor whether LED light sources are illuminating with illuminance corresponding to a set value. The controller senses the illuminance inside the main body 10 using the illuminance sensor at the initial stage of driving of the system and at each set period, and controls the amount of light of the lighting unit to maintain the illuminance within the set range when the sensed illuminance is out of an error range.

The controller captures the inside of the main body 10 at the initial stage of driving of the system and at each set period for the performance inspection of the camera unit, and compares the captured images with previously captured images to check the condition of the camera unit and the capture environment of the main body.

The controller may guide the seller to remove an attachment from the terminal when an incorrect determination is expected due to the attachment attached to the electronic device, and at this time, inform of the switching to purchasing with deferred payment in response to the incorrect determination caused by the attachment.

Among the elements constituting the present disclosure, the camera unit 20 is relatively expensive and requires maintenance or replacement due to a failure.

Therefore, reducing the number of camera units 20 may reduce the manufacturing cost or the manpower and cost of maintenance.

For this, the present disclosure may use reflective mirrors 60 to reduce the number of cameras.

The reflective mirrors 60 are mounted inside the main body, allowing the camera unit 20 to capture the electronic device M from a direction that the camera unit 20 does not face (i.e., a direction from which the camera unit may not capture the electronic device M directly).

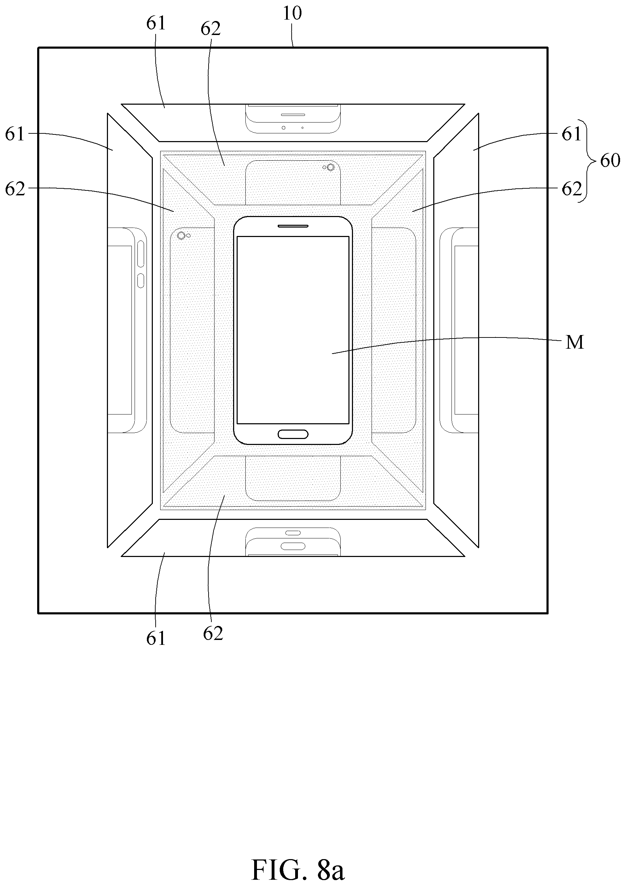

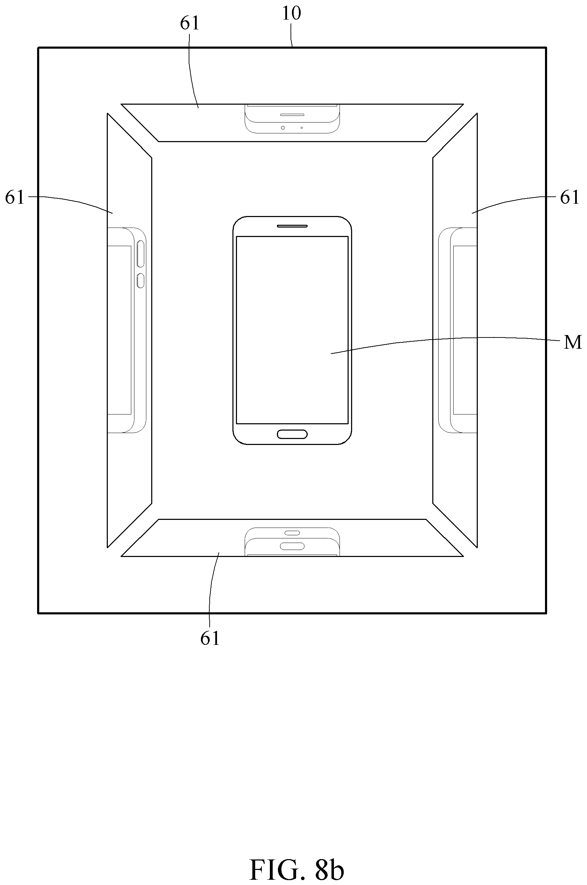

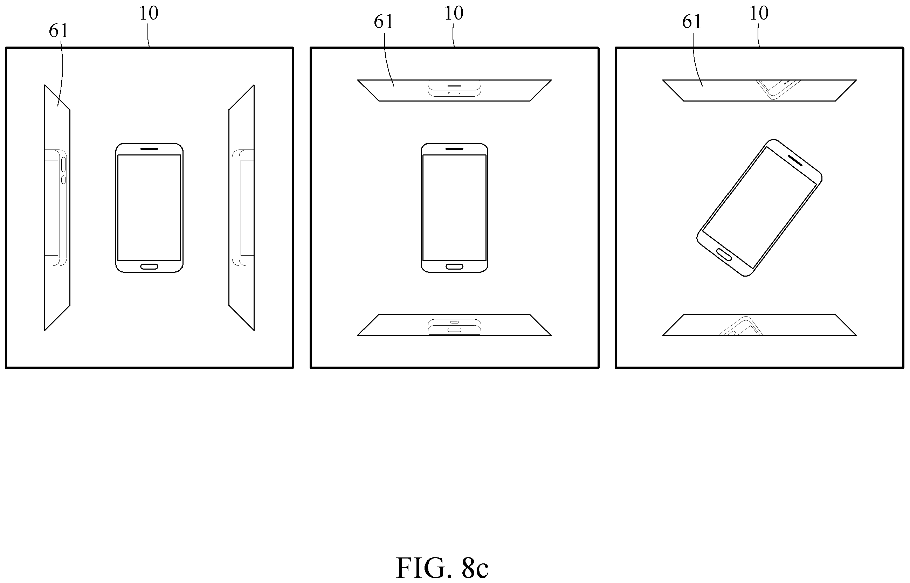

FIG. 8a is an example of a structure in which a single camera simultaneously captures six faces of the electronic device M, FIG. 8b is an example of a structure in which a single camera simultaneously captures five faces of the electronic device M, and FIG. 8c is an example of a structure in which a single camera simultaneously captures three faces of the electronic device M.

Of the exterior of the electronic device M, the front face with tempered glass is the most important. So, the camera unit 20 may preferably use a front camera that is mounted over the main body to capture the electronic device M frontally from above (where the fourth camera 24 of FIG. 2a may be used as the front camera).

Further, the reflective mirrors 60 include side mirrors 61 for allowing the front camera to capture the side surfaces of the electronic device M at the same time, and rear mirrors 62 for allowing the front camera to capture the rear surface of the electronic device M at the same time.

Referring to FIG. 8a, the four side mirrors 61 provided at upper sides from the transparent plate on which the electronic device M is placed in the darkroom of the main body 10 provide a front camera with the side surfaces of the electronic device M, and the rear mirrors 62 provided at lower sides from the plate provide the front camera with the rear surface of the electronic device M. One to four rear mirrors 62 may be used according to the size and angle to provide the entire rear surface of the electronic device M.

FIG. 8b shows a structure in which the rear mirrors 62 are not used, such that the front camera may capture five faces of the electronic device M, except for the rear face, at the same time, and FIG. 8c shows a structure in which the rear mirrors 62 are not used and two side mirrors 61 are used, such that the front camera may capture the front surface and two side surfaces of the used electronic device M at the same time.

The size of the electronic device M varies depending on its type. Therefore, the reflective mirrors 60 may preferably have adjustable angles so as to capture an optimal image of the side faces and rear face even if the type of the electronic device M is different.

When the electronic device M is collected in the main body 10 through the valuation and purchase of the electronic device M, the seller may be paid the purchase price. However, if there is a collection box (not shown) for collecting electronic devices M is separately provided, the seller may be paid the purchase price after it is confirmed that the electronic device M received in the collection box is the same as the electronic device M valuated in the main body 10.

Various methods may be used to confirm that the electronic device M received in the separate collection box is the same as the electronic device M enrolled for the valuation in the main body 10.

The used electronic device M enrolled in the main body 10 may have wired or wireless connection to the main body for valuation, and a program for valuation may be installed for remote control on the electronic device M. The electronic device M received in the collection box also has wired or wireless connection to the collection box to authenticate the sameness of the electronic devices M.

Since each of the main body 10 and the collection box may obtain the unique ID of the electronic device M having wired or wireless connection thereto, it is possible to authenticate the sameness of the electronic devices M by comparing their unique IDs through the collection box. Here, the unique ID of the electronic device M may include a MAC address of hardware, model information, unique numbers of parts, a serial number of an installed program, and the like.

If the electronic device M enrolled in the main body is remotely controlled for valuation, the electronic device M received in the collection box may also be remotely controlled. Therefore, the sameness of the electronic devices M may be authenticated by a method that the electronic device M recognizes the internal environment of the collection box through remote control.

For example, it is possible to cause the electronic device M to recognize a variety of environmental information, such as informative lighting, receiving path, frequency, and sound, output from the collection box through remote control. If the environmental information output from the collection box matches the environmental information recognized by the electronic device M, it is authenticated the electronic devices M are the same electronic device M. At this time, the environmental information output from the collection box should not be released outside the collection box.

Specific examples are as follows.

The sameness is authenticated in a manner that lighting devices emitting light of different colors are installed in the collection box, one of the lighting devices is lit on and captured by a camera of the electronic device M, and whether the same color is captured is verified. Alternatively, the sameness may be authenticated in a manner that the lighting devices are lit on and off to flicker, and the number of flickers is checked.

The sameness may be authenticated by analyzing a request for the path along which the electronic device M is received, and the movements of a gyro sensor in the electronic device M, such as slopes, curves, and the like, when receiving the electronic device M in the collection box.

The sameness may be authenticated in a manner that a speaker installed inside the collection box generates a specific sound (frequency), and a microphone of the electronic device M obtains the sound.

Contrary to the above, the sameness may be authenticated in a manner that the electronic device M received in the collection box displays a predetermined color on the screen, and a camera installed inside the collection box captures the color, or the sameness may be authenticated in a manner that the electronic device M outputs a predetermined sound (frequency), and a microphone installed in the collection box obtains the sound.

After the valuation of the electronic device M through the system and the purchase of the electronic device M based on the valuation, data stored in the memory of the electronic device M are deleted, that is, the memory is initialized to prevent leakage of personal data or information of the owner (that is, the seller) of the electronic device M.

To prevent such leakage of personal information of the original owner from the purchased electronic device M, the controller 50 may include the data deleting module 62. If it is inappropriate overall in terms of cost and security to provide the data deleting module 62 in a kiosk installed in the field to delete data, the data deleting module 62 may be provided in the control center.

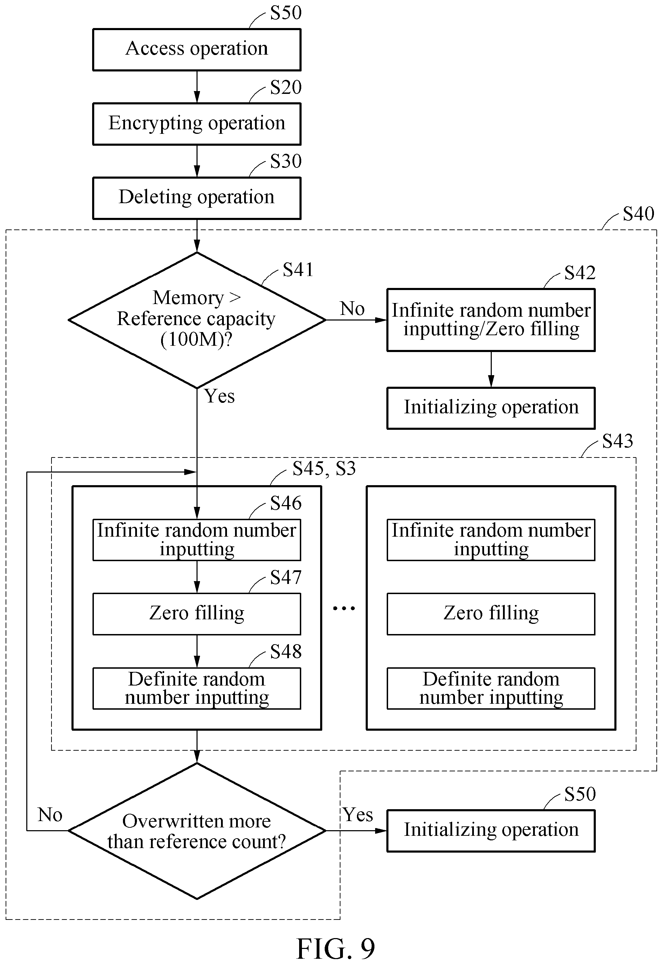

FIG. 9 illustrates a procedure related to the method of deleting data in the electronic device M, performed by the data deleting module 62.

Referring to FIG. 9, the method of deleting data in the electronic device M includes access operation S10 of accessing a data area of the electronic device M, encrypting operation S20 of encrypting the data area of the accessed electronic device M, deleting operation S30 of deleting the encrypted data area, random overwriting operation S40 of completely deleting data in the data area, and initializing operation S50 of performing a factory reset of the electronic device M.

Each operation will be described in detail below.

First, access operation S 10 refers to an operation of entering a debug mode by connecting the electronic device M, and generally an operation of connecting the data deleting module and the electronic device M using a separate USB cable.

The debug mode is a mode that outputs detailed information that helps to detect and correct system errors, and often called a developer mode, and used to copy data in an area that is difficult to access arbitrarily within a mobile device or forcibly install a predetermined application by forcibly connecting a PC to the mobile device from the outside, or to retrieve device information that is not displayed in a typical user mode.

In order to enter the developer mode again, user authentication or verification is required, and for this purpose, it is preferable to perform a process of driving a separate authentication or verification procedure.

Upon entering the debug mode, in general, deleting operation S30 of deleting the data area of the electronic device M is immediately performed for deletion. In this case, it is possible to recover the deleted data through a separate recovery program, which may cause an issue of personal information leakage.

Therefore, to prevent the data from being read even when the data is recovered through the recovery program, the present disclosure further performs encrypting operation S20, to which encryption techniques are applied, on the entire data area. In doing so, even when the data are recovered through the data recovery program after deleted, the data are recovered as encrypted data, not allowing the data to be immediately recovered without the encryption code used at the time of encryption.

In detail, first, in order to proceed with the overall deletion process such as encrypting operation S20 and deleting operation S30, it is preferable to perform a process of driving a verification procedure according to progress and whether the user approves, as in entering the debug mode.

When the approval of the user is verified in the above process, encrypting operation S20 of encrypting the data area is performed.

To this end, first, a general structure of the memory of the electronic device M will be described.

Unlike that of a general desktop PC, the memory of the electronic device M is divided into a boot area, a system area, a recovery area, a data area, a cache area, and a Misc area.

The boot area is a space for storing programs, resources, and data to boot the electronic device M.

The system area is a space for storing system-related files necessary for driving the electronic device M, and a space for storing programs installed when the electronic device M is produced in a factory.

The recovery area is a space for storing recovery programs to recover the system area mentioned above to its factory default state, generally when performing a factory reset.

The data area is a space for storing programs and personal files (contacts, messages, settings) stored by the user, wherein personal information of each user is contained in this space.

In addition, the cache area is a space for storing cache data, wherein the cache data are data automatically stored to improve the access speed by temporarily storing data and instructions between a central processing unit and a main memory unit, in a small high-speed memory unit provided to improve the performance.

In addition, the Misc area is a space for storing carrier or region ID (CID), USB configuration, and specific hardware setting-related information.

Therefore, encrypting operation S20 is encrypting each section of the electronic device M, in particular, the data area, wherein all data files such as personal information, that is, messages, photos, contacts, photos, and certificates are encrypted not to be read arbitrarily.

More specifically, encrypting operation S20 is encrypting the data area, particularly, both the data rea of internal memory and the data area of external memory, wherein the data area is encrypted using an encryption code, in particular, the AES-128-bit method.

The AES encryption method will be described below.

First, the National Bureau of Standards of the United States established an encryption standard called the Data Encryption Standard (DES) for data encryption in 1975. This technique is a symmetric-key encryption method that uses a 56-bit key and had been used for a while without particular issues. However, due to its short key length and a backdoor, there was an issue that it could be decrypted using a special method.

Therefore, the AES technique, developed to solve such an issue, also uses a symmetric-key method that uses the same key for encryption and decryption, but greatly differs from DES in processing a 128-bit block with 128-bit, 196-bit, or 256-bit key lengths.

After the data area is encrypted as described above, deleting operation S30 of deleting the encrypted data area is performed.

Deleting operation S30 refers to an operation of deleting the sections of the electronic device M mentioned above, that is, both the data area and the cache area.

This deleting operation S30 is erasing the record from a file system and is not actually finding and erasing the files, and thus the files may be easily recovered using a recovery program.

Therefore, the present disclosure performs deleting operation S30 and further performs random overwriting operation S40 for more perfect deletion of the data area.

Random overwriting operation S40 refers to permanent deletion, which is different from normal deletion, wherein there are a zero filling scheme of filling in the entire data area with "0" or "1" and an infinite random number inputting scheme of filling in the entire data area with non-overlapping characters to delete all data.

The present disclosure does not follow a simple method of the operating system, but performs random overwriting in a manner of deleting the record of the file system and simultaneously moving to an actual file space recorded in the data area, and writing new data, that is, "0" or "1" or non-overlapping characters on the file.

In general, as for the complete data deletion method, DoD 5220.22-M, the standard recommended by the Department of Defense of the United States or the National Intelligence Service of South Korea, is applied to storage media such as HDDs in PCs, and it recommends overwriting more than three times. Meanwhile, mobile devices use flash memory as storage devices, unlike the storage media such as HDDs in PCs. For flash memory, direct data overwriting is impossible, and thus complete data deletion is performed in a manner of deleting all data, performing zero filling, deleting all data again, and performing zero filling. However, such overwriting multiple times on flash memory takes a long time and has a side effect of reducing the memory life, and it is known that one-time overwriting is sufficient for complete data deletion. Thus, it is a general trend to perform zero filling about one time. However, with the development of data recovery techniques together with the deletion method, it is impossible to guarantee complete data deletion with simple one-time zero filling. Recovery techniques, such as using H/W, are also developing, making it difficult to expect complete deletion.

Therefore, the present disclosure enables complete deletion of data by using both the zero filling scheme of recording data as "0" or "1" and the infinite random number inputting scheme of inputting non-overlapping characters according to the condition of the electronic device M.

As an additional security plan, the present disclosure performs encrypting operation before random overwriting operation S40 such that even when personal information is recovered, it is recovered as an encrypted file and thus, not readable, thereby more perfectly protecting personal information.

In random overwriting operation S40, the present disclosure uses both the infinite random number inputting scheme and the zero filling scheme to more safely protect personal information, and processes those schemes in parallel for faster processing.

This will be described in more detail with reference to FIG. 9.

First, random overwriting operation S40 determines whether the capacity of the data area in the memory is greater than a reference capacity (e.g., 100M), in operation S41.

If it is determined that the capacity of the data area is smaller than the reference capacity, data are completely deleted using the infinite random number inputting scheme, the zero filling scheme, or both for the entire data area, in operation S42.

If it is determined that the capacity of the data area is greater than the reference capacity, the data area is divided sequentially into sectors S45 of a divided capacity (e.g., 280M) size, in operation S43. Here, the sectors S45 are physically and logically divided so as not to affect each other.

Complete data deletion is performed using both the infinite random number inputting scheme and the zero filling scheme for the first Upon starting the complete data deletion for the first sector, the division of the second vector from the remaining portion of the data area is immediately started. Upon the completion of the division of the second sector, complete data deletion is performed, and the division of the third sector is started.

Therefore, random overwriting operation S40 is performed in a parallel processing manner that complete data deletion for the multiple sectors S45 divided from the data area is performed at the same time, whereby the time for complete data deletion for the entire data area is reduced.

The method of completely deleting data from a sector S45 includes operation S46 of completely deleting data using the infinite random value inputting scheme for a portion of the sector (e.g., 90M of 280M), operation S47 of completely deleting data using the zero filling scheme for a portion (100M) of the remaining portion (e.g., 190M (280-90)), and operation S48 of completely deleting data using the infinite random number inputting scheme for the entire remaining portion (e.g., 90M).

The electronic device M that has undergone random overwriting operation S40 undergoes initializing operation S50 of performing a factory reset for reuse. Through this, the data existing in the electronic device M may be completely deleted. In case of an attempt of recovery for the purpose of illegal activity, data are recovered as encrypted and unreadable data, so that the security may be further enhanced.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter. The above-described devices may be configured to act as one or more software modules in order to perform the operations of the above-described embodiments, or vice versa.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

A number of embodiments have been described above. Nevertheless, it should be understood that various modifications may be made to these embodiments. For example, suitable results may be achieved if the described techniques are performed in a different order and/or if components in a described system, architecture, device, or circuit are combined in a different manner and/or replaced or supplemented by other components or their equivalents.

Accordingly, other implementations are within the scope of the following claims.

## Claims

1. An electronic device valuation system comprising:
a display;
a main body in which an electronic device is placed;
a camera configured to capture the electronic device using light devices; and
a controller configured to display, on the display, a value of the electronic device determined based on visual inspection results of the electronic device and performance inspection results of the electronic device,
wherein
the visual inspection results are based on an image of the electronic device captured by the camera, and
the lighting devices output light, wherein a portion of the lighting devices output light of different wavelengths so as not to offset a diffuse reflection of visual defects of the electronic device.

2. The electronic device valuation system of claim 1, wherein the other portion of the lighting devices output light of the same wavelength or output light of different wavelengths.

3. The electronic device valuation system of claim 2, wherein a distance between the portion of the lighting devices is shorter than a distance between the other portion of the lighting devices.

4. The electronic device valuation system of claim 1, wherein
a first lighting device of the lighting devices is positioned on a first side inside the main body,
a second lighting device of the lighting devices is positioned on a second side facing the first side,
a third lighting device of the lighting devices is positioned on a third side inside the main body, and
a fourth lighting device of the lighting devices is positioned on a fourth side facing the third side.

5. The electronic device valuation system of claim 4, wherein the first lighting device and the second lighting device output the light of the different wavelengths.

6. The electronic device valuation system of claim 4, wherein the first lighting device and the second lighting device output light at a first illumination angle, and the third lighting device and the fourth lighting device output light at a second illumination angle.

7. The electronic device valuation system of claim 1, wherein the visual defects comprise defects in the display of the electronic device.
